# EUROPEAN PATENT APPLICATION

(11) **EP 3 048 543 A1**
(43) Date of publication of application: **27.07.2016**
(21) Application number: 14846232.8
(22) Date of filing: 17.07.2014
(51) Int. Cl.: G06F 17/50

(54) **DESIGN INFORMATION PROVISION DEVICE**

(30) Priority: 20.09.2013 JP 2013195897
(71) Applicant: Misumi Corporation, Bunkyo-ku Tokyo 112-8583 (JP)
(72) Inventor: KANATANI, Tomoki, Tokyo 112-8583 (JP); IWAI, Kuniyoshi, Tokyo 112-8583 (JP)
(74) Representative: Schön, Christoph
(86) International application number: PCT/JP2014/069021
(87) International publication number: WO 2015/040947

(57) **Abstract**

Provided is a design information providing device configured to allow a user to rationalize designing of a composite component with desired specifications and to convey useful technical knowledge on designing of the composite component to the user.

A design information providing server (1) includes a first webpage transmitter (8) configured to transmit data on a webpage displaying a plurality of composite components to a terminal (3), a second webpage transmitter (10) configured to transmit data on information such as a design consideration of a selected composite component at the terminal (3), and a file transmitter (12) configured to transmit, in response to a file request from the terminal (3), file data to the terminal (3), the file data containing information on the selected composite component with default specifications and elemental components thereof and information on elemental components of a selected composite component with non-default specifications.

## Description

### Technical Field

The present invention relates to a design information providing device configured to provide information on a composite component via a network.

### Background Art

A design process of facilities such as factories includes designing of a composite component formed by assembling of a plurality of elemental components.

The elemental components constituting the composite component include an internally-manufactured elemental component(s) internally-manufactured by a corporation of a designer, and a marketed elemental component(s) marketed by a distributor. The designer needs to design the composite component by combining the internally-manufactured elemental component(s) and the marketed elemental component(s) together, and rationalization of designing and ordering is desired. Moreover, the designer also needs to gain knowledge on designing of the composite component.

Patent Literature 1 discloses a specification change system configured to categorize components of a composite component into a main variable component(s) for which a specification change is required with a change in the specifications of the composite component and a sub variable component(s) for which a specification change is required with a change in the main variable component(s). In this system, a dimensional change coefficient as the ratio of the degree of change in the dimensions of the sub variable component to the degree of change in the dimensions of the main variable component, is defined. In the case where the dimensions of the main variable component are changed with a change in the specifications of the composite component, the dimensions of the sub variable component are automatically changed based on the dimensional change coefficient.

Patent Literature 2 discloses a system configured to execute, when receiving shape and attribute information of a composite component as parameter values, component deployment processing based on such information to obtain, e.g., the shape of each elemental component of the composite component, and form a component drawing.

Patent Literature 3 discloses an order system configured such that a product purchaser of, e.g., a furniture assembly formed of a plurality of components utilizes the Internet to order a product matching purchaser's use environment from a product distributor. According to such a system, the purchaser accesses to a website of the distributor via the Internet to execute a predetermined simulation prepared on the website. Then, while selecting the components, the purchaser arranges and designs the furniture assembly on a design window as a simulation condition setting window displayed by execution of the predetermined simulation. When a design drawing of the furniture assembly is completed, a component list including the types, model numbers, quantities, and prices of the components used for the furniture assembly is displayed on a window, and then, the furniture assembly is ordered based on the component list.

### Citation List

### Patent Literature

Patent Literature 1: Japanese Patent Laid-Open No. H08-161386
Patent Literature 2: Japanese Patent Laid-Open No. H10-11488
Patent Literature 3: Japanese Patent Laid-Open No. 2001-229306

### Summary of Invention

### Technical Problem

In the design systems of Patent Literatures 1 and 2, a user as a designer designs, using one's own computer, an assembly product based only on component data stored in the computer, leading to much time and effort in designing of the assembly product.

In the design system of Patent Literature 3, a user accesses to the website of the distributor via the Internet to execute the simulation, and then, selects and arranges the components on the design window as the simulation condition setting window to design the furniture assembly. Thus, collection of component data can be skipped. With uses of such a system, while it is possible to design an assembly product that is constructed by simply arranging a plurality of components on the design window on a single plane for assembling, it is difficult or takes much effort and time to design an assembly product that is constructed by sterically arranging a plurality of components for assembling.

Moreover, in the design systems of Patent Literatures 1 to 3, no opportunity of gaining useful technical knowledge on designing of an assembly product is provided to the user when the user is designing the assembly product.

The present invention is intended to provide a design information providing device configured to rationalize designing of a composite component formed by assembling of a plurality of elemental components and to convey useful technical knowledge in designing of the composite component.

### Solution to Problem

A design information providing device of the present invention includes a first webpage transmitter configured to transmit data on a first webpage where a plurality of composite components are arranged and displayed, to a terminal via a network, each of the composite components being formed by assembling of a plurality of elemental components including a marketed elemental component; a receiver configured to receive, via the network, data indicating a selected composite component which is a composite component selected by a user from the first webpage displayed on the terminal; a second webpage transmitter configured to transmit data on a second webpage to the terminal via the network, the second webpage displaying a 3D view of the selected composite component, the name of each elemental component forming the selected composite component and the position of each elemental component forming the selected composite component on the 3D view, a design consideration on the selected composite component, and a file request operation section; a request receiver configured to receive a file request made by the user via the file request operation section at the terminal; and a file transmitter configured to when the request receiver receives the file request, transmit data on a design file of the selected composite component to the terminal via the network such that the specifications of the selected composite component is changed from default specifications at the terminal, the data on the design file containing information on a composite component with the default specifications, information on elemental components forming the composite component with the default specifications, and information on elemental components forming a composite component with specifications different from the default specifications.

According to the present invention, the selected composite component design file data containing the information on the composite component with the default specifications, the information on the elemental components forming the composite component with the default specifications, and the information on the elemental components forming the composite component with the specifications different from the default specifications is transmitted to the user's terminal via the network. This allows the user to select a desired one of the composite component with the default specifications or the composite component with the specifications different from the default specifications at the terminal to rationalize designing of the composite component with the desired specifications.

Moreover, the user can refer to the design consideration in association with designing of the composite component on the second webpage, and therefore, useful technical knowledge on designing of the composite component can be conveyed.

Further, sufficient and rich design considerations on the second webpage leads to an increase in sales of the marketed elemental component, and this motivates a distributor to increase the sales of the marketed elemental component. As a result, more sufficient and rich design considerations on the second webpage are provided to the user based on the technical knowledge collected from clients etc., and therefore, the distributor can contribute to the benefit of the entire society to increase and spread the technique of designing the composite component across the entire society.

In the design information providing device of the present invention, the elemental components forming the composite component preferably include, in addition to the marketed elemental component marketed by a provider of the design file, an internally-manufactured elemental component internally manufactured by the user, the internally-manufactured elemental component preferably includes a plurality of first-type internally-manufactured elemental components identified by a first parameter value, the marketed elemental component preferably includes a plurality of second-type marketed elemental components identified by a second parameter value, the design file preferably contains data on the plurality of first-type internally-manufactured elemental components, data on the plurality of second-type marketed elemental components, and data on plural combinations between the first and second parameter values, one of the plural combinations is preferably set corresponding to the composite component with the default specifications, the remaining combination(s) is preferably set corresponding to the composite component with the specifications other than the default specifications, and the data on the design file of the selected composite component is preferably made such that the specifications of the selected composite component is changeable by changing the combination.

According to such a configuration, the downloaded file contains, in advance, data on the internally-manufactured elemental component(s) and the marketed elemental component(s) having the parameter values in the combinations corresponding to the specifications other than the default specifications. Thus, a maker of the composite component can change the specifications of the composite component by changing the combination, thereby rationalizing specification change processing.

In the design information providing device of the present invention, the second parameter value in the combination corresponding to the default specifications and the second parameter value in the combination corresponding to the specifications other than the default specifications are preferably dynamically set.

According to such a configuration, since the second parameter value in the combination corresponding to the default specifications and the second parameter value in the combination corresponding to the specifications other than the default specifications are dynamically set, the value of a marketed elemental component that the distributor most wishes to sell on a moment-to-moment basis can be set as the second parameter value in the combination with the default specifications, or the combination including the second parameter value corresponding to a marketed elemental component which is out of stock can be excluded. This can increase the efficiency in marketing of the marketed elemental component.

In the design information providing device of the present invention, each composite component is preferably divided into a plurality of composite component portions such that a parameter value combination change is made without interference, and each combination is set for a corresponding one of the composite components portions.

According to such a configuration, the composite component is divided into the plurality of composite component portions such that the parameter value combination change can be made without interference. Thus, the total number of combinations defined across the entirety of the composite component is lower than the number of combinations set for the entirety of the composite component. This reduces the amount of data to be transmitted to the terminal, as well as increasing the number of specification changes across the entirety of the composite component.

In the design information providing device of the present invention, the design file preferably contains data on a component drawing of each marketed elemental component having a corresponding parameter value, and data on the name of the component drawing, the name including a model number determined for each marketed elemental component having a corresponding parameter value by the provider of the design file.

According to such a configuration, the name of the component drawing of each marketed elemental component having a corresponding parameter value includes the model number determined for each marketed elemental component by the provider of the design file. Thus, the user can save the trouble of obtaining the data of the model number information of the marketed elemental component separately from the data of the design file in order to order the marketed elemental component included in the composite component having the determined specifications, thereby properly ordering the marketed elemental component from the provider of the design file.

### Brief Description of Drawings

FIG. 1 is a diagram of a design information providing server and terminals connected together via the Internet.
FIG. 2 is a view of a composite component selection webpage displayed in the case of selecting an "ALL" tag from a tag row.
FIG. 3 is a view of the composite component selection webpage displayed in the case of selecting a "DRIVE MECHANISM" tag from the tag row.
FIG. 4 is a view of a special webpage for an application example selected on the composite component selection webpage.
FIG. 5 is a view of a popped-up window displayed when a user clicks a request button for a composite component CAD file.
FIG. 6 is a view of a CAD window displayed when a CAD file downloaded from a design information providing server to a terminal is opened using corresponding CAD software.
FIG. 7 is an enlarged view of a drawing name list column of FIG. 6.
FIG. 8 is a hierarchical structure diagram of components of a finished assembly product formed by a maker.
FIG. 9 is a perspective view of an air cleaning device.
FIG. 10 is a hierarchical structure diagram in the case where the air cleaning device is applied to the hierarchical structure of FIG. 8.
FIG. 11 is a table of each combination between a parameter value of an internally-manufactured elemental component and a parameter value of a marketed elemental component in a composite component portion.
FIG. 12 is a view of parameter values of an air blower as specific examples of the parameter values in the combinations of FIG. 11.
FIG. 13 is a table of each combination among a parameter value of an internally-manufactured elemental component and parameter values of marketed elemental components in another composite component portion.
FIG. 14 is a view of parameter values of a feeder as specific examples of the parameter values in the combinations of FIG. 13.
FIG. 15 is a list of configuration information displayed in a list area of the CAD window when the user clicks a configuration icon on the CAD window of FIG. 6.

### Description of Embodiments

### [Use Pattern of Design Information Providing Server]

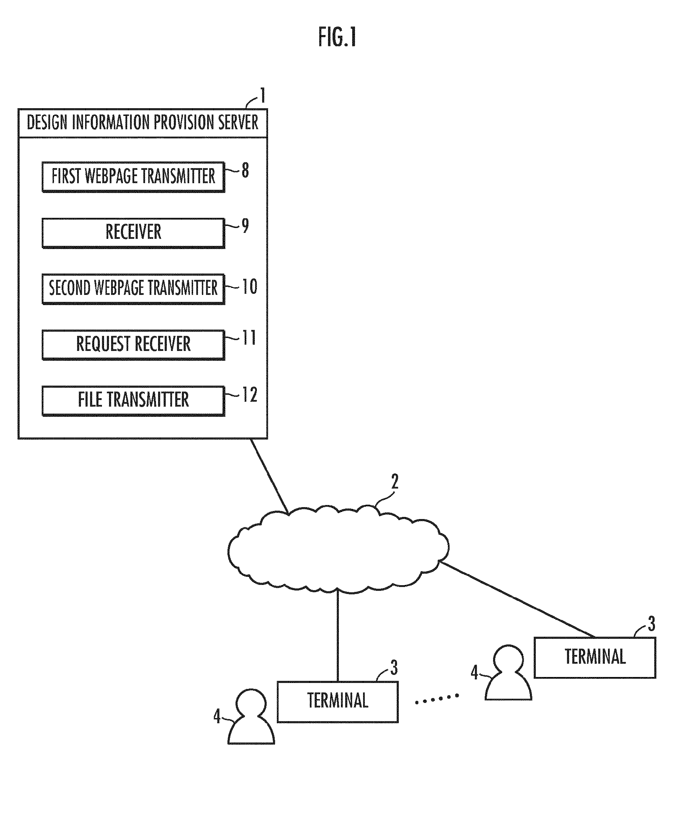

FIG. 1 illustrates a design information providing server 1 (equivalent to a "design information providing device") and terminals 3 connected together via the Internet 2. A single design information providing server 1 and a plurality of terminals 3 are connected to the Internet 2. The design information providing server 1 is managed by a distributor of elemental components. The design information providing server 1 provides the terminals 3 in a plurality of composite component makers with useful information on designing of the composite components formed by assembling of the elemental components. Each terminal 3 is a client to the design information providing server 1, and is operated by a user 4. The user 4 is a user of the composite component maker, for example.

The elemental component distributor of the design information providing server 1 and the composite component makers of the terminals 3 are in a relationship of "one" distributor versus "plural" makers, and the elemental components marketed by the distributor are purchased by the makers. Each terminal 3 illustrated in FIG. 1 is owned by a corresponding one of the composite component makers different from each other. A plurality of terminals 3 can be owned by the same composite component maker. Note that the elemental component distributor of the design information providing server 1 is also a provider of a CAD file described later.

The elemental components forming the composite component include an internally-manufactured elemental component(s) internally manufactured by each composite component maker, a marketed elemental component(s) marketed by the elemental component distributor managing the design information providing server 1, and marketed elemental components marketed by other elemental component distributors.

Each composite component maker assembles the internally-manufactured elemental component(s), the marketed elemental component(s) purchased from the elemental component distributor of the design information providing server 1, and the marketed elemental component(s) purchased from the other elemental component distributor(s) to form the composite component for private use or sale. Each composite component maker completes a drawing of the composite component using the CAD software of the terminal 3, and based on the completed drawing, forms the composite component and orders the elemental components. Note that completion of the drawing of the composite component by the CAD software means completion of designing of the composite component.

An access target of the terminal 3 is not limited only to the design information providing server 1, and may be a general-purpose terminal accessible to any server, such as a personal computer. Software other than the CAD software and browser is installed on the terminal 3 as a general-purpose terminal.

The design information providing server 1 has, as a computer, a well-known configuration including, e.g., a CPU, a RAM, a ROM, a hard drive, a display device, and an input device (e.g., a keyboard). The design information providing server 1 includes, as functional elements, a first webpage transmitter 8, a receiver 9, a second webpage transmitter 10, a request receiver 11, and a file transmitter 12. These functional elements are generated in such a manner that the CPU of the design information providing server 1 reads a predetermined program from the hard drive to execute such a program.

The first webpage transmitter 8 is configured to transmit data on composite component selection webpages 20a, 20b (see FIG.s 2 and 3) as first webpages to the terminal 3 via the Internet 2.

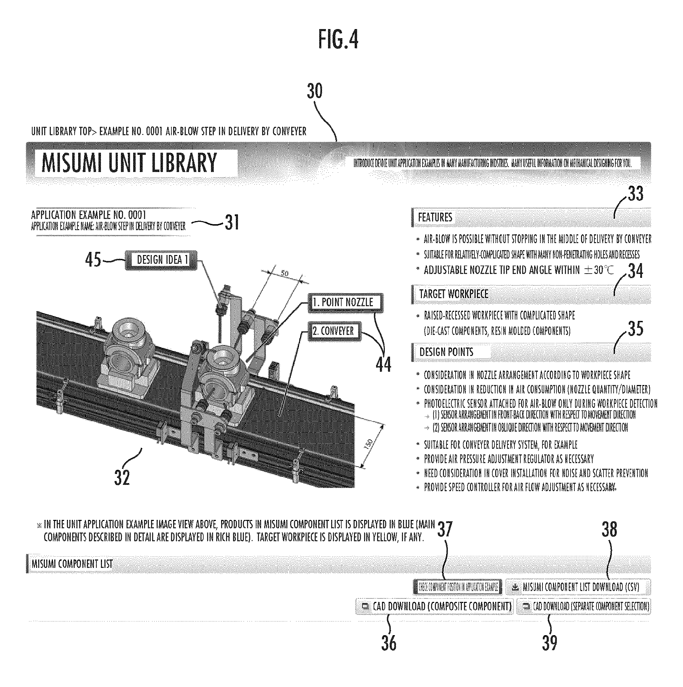

The receiver 9 is configured to receive, via the Internet 2, data on information indicating the composite component selected by the user 4 on the composite component selection webpage 20a, or 20b displayed on the terminal 3. The second webpage transmitter 10 is configured to transmit, via the Internet 2, data on a selected application example webpage 30 (see FIG. 4) as a second webpage to the terminal 3. The request receiver 11 is configured to receive a CAD file request from the terminal 3.

The file transmitter 12 is configured to transmit, via the Internet 2, data on a CAD file of the selected composite component to the terminal 3 when the request receiver 11 receives the CAD file request. In order to change, using the CAD software of the terminal 3, the specifications of the selected composite component from default specifications by selecting, e.g., a later-described combination (see FIG.s 11 and 13), the CAD file of the selected composite component contains information on the composite component with the default specifications, the elemental components forming the composite component with the default specifications, and the elemental components forming the composite component having specifications other than the default specifications.

### [Display on Terminal]

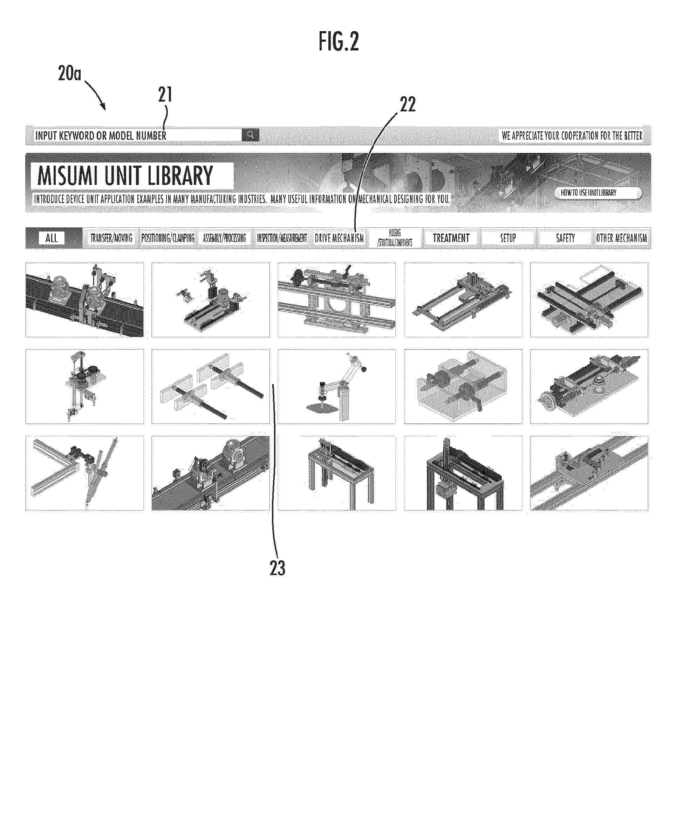

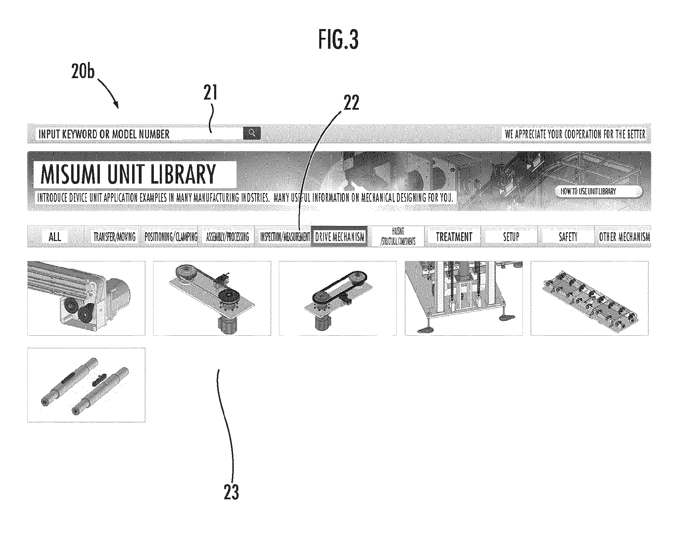

FIG.s 2 and 3 illustrate browser windows displayed on the terminal 3 based on the webpage data transmitted from the design information providing server 1. FIG. 2 illustrates the composite component selection webpage 20a in the case where an "ALL" tag is selected from a tag row 22, and FIG. 3 illustrates the composite component selection webpage 20b in the case where a "DRIVE MECHANISM" tag is selected from the tag row 22. The composite component selection webpage 20a, 20b is displayed on the browser window when the user 4 starts the browser at the terminal 3 to access to the design information providing server 1.

A title "MISUMI UNIT LIBRARY" is an example of a name provided to the group consisting of composite component-related webpages provided from the design information providing server 1 to the terminal 3, such as the composite component selection webpages 20a, 20b and the selected application example webpage 30 illustrated in FIG. 4. In this example, on any of the composite component-related webpages, such a title is displayed at an upper end of the webpage. This allows the user 4 to recognize each webpage as the webpage of the "MISUMI UNIT LIBRARY." Note that in this example, "MISUMI" is a main part of the name of a corporation which is the elemental component distributor and manages the design information providing server 1. The name of the group consisting of the plurality of webpages includes the main part of the corporate name, thereby enhancing an advertising effect of such a corporate name.

The composite component selection webpage 20a, 20b includes a search window 21, the tag row 22, and an application example selection area 23. The search window 21 is set such that a search word(s) is input to the search window 21 in the case where searching is, as the scope of searching, performed not only across the composite component selection webpages 20a, 20b but also across all webpages in the group to which the composite component selection webpages 20a, 20b belong. The user 4 inputs a search word(s) to the search window 21 to click a search icon. In response, the design information providing server 1 searches the search word(s) from the group to send back a search result webpage to the browser of the terminal 3. If the search word(s) is found, the list of extractions, such as titles and related description, from the webpages containing the search word(s) is displayed on the search result webpage as in a search result webpage in a well-known search engine.

In the case of displaying the composite components in the application example selection area 23 according to categories, each tag in the tag row 22 is operated by the user 4 on the browser window of the terminal 3. The tag row 22 includes tags of "ALL," "TRANSFER/MOVING," "POSITIONING/CLAMPING," "ASSEMBLY/PROCESSING," ..., and "OTHER MECHANISM."

On the composite component selection webpage 20a of FIG. 2, the "ALL" tag is selected to display all application examples of the "MISUMI UNIT LIBRARY." Each composite component is posted corresponding to the application example. Each application example is assigned to the "ALL" tag as a general tag in the tag row 22, and is also assigned to one or more of separate category tags other than the "ALL" tag.

On the composite component selection webpage 20b of FIG. 3, the "DRIVE MECHANISM" tag is selected to display only the application examples categorized as the "DRIVE MECHANISM" tag in the "MISUMI UNIT LIBRARY." When the user 4 selects a desired tag from the tag row 22, the application example(s) assigned to the selected tag is displayed in the application example selection area 23. In this manner, the user 4 can efficiently search the application example whose information is desired each time.

In the application example selection area 23, a plurality of application examples assigned to the tag selected from the tag row 22 are arranged and displayed in a grid pattern. Each application example is displayed in the form of a 3D view.

On the composite component selection webpage 20b of FIG. 3, the number of application examples displayed in the application example selection area 23 is low. Thus, the 3D views of all of the application examples assigned to the "DRIVE MECHANISM" tag are displayed on a single browser window. On the other hand, since the number of application examples displayed in the application example selection area 23 on the composite component selection webpage 20a of FIG. 2 is high, the 3D views of all of these application examples cannot be displayed at once on a single browser window.

For this reason, only an upper end portion of the composite component selection webpage 20a is displayed in FIG. 2. In order to display part of the application example selection area 23 which is not displayed on the current browser window, the user 4 scrolls down the browser window on the composite component selection webpage 20a by, e.g., clicking of a scroll down key of the terminal 3 with a mouse.

FIG. 4 illustrates the selected application example webpage 30 displayed as a switched browser window in the case of selecting an upper left application example of the application example selection area 23 on the composite component selection webpage 20a of FIG. 2. Note that such an application example (Example No. 0001 (hereinafter referred to as "Example No.1")) can be selected from the application example selection area 23 when the tag (e.g., the "TRANSFER" tag) of the tag row 22 to which Example No.1 belongs is selected, other than being selected from the application example selection area 23 when the "ALL" tag is selected from the tag row 22.

On the selected application example webpage 30, a title column 31, a 3D view column 32, a feature column 33, a target workpiece column 34, a design point column 35, a composite component data request button 36, a component position confirmation button 37, a component list request button 38, and an elemental component data request button 39 are displayed, for example. Further, an elemental component name button(s) 44 and an idea button(s) 45 are each linked with a corresponding portion of a 3D view of the 3D view column 32 by a lead line.

In the title column 31, the number (No.) and name of the present application example (in this example, Example No. 1) are displayed. A name briefly expressing the contents of an application example and being distinguishable from other application examples is selected as the application example name.

In the 3D view column 32, the 3D view of the present application example is displayed. In the feature column 33, the characteristics (the technical matters distinguished from a general-purpose composite component) of the present application example are displayed. In the target workpiece column 34, the name of a target workpiece is displayed. The target workpiece is an expected workpiece (product) handled by a productive facility including the present application example as part of the productive facility. For example, Example No. 1 is incorporated into a productive facility including an air-blow cleaning step. This productive facility handles die-cast components and resin molded components at the air-blow cleaning step. Thus, the target workpiece in the present application example is the die cast component or the resin molded component.

In the design point column 35, a design point(s) is displayed as a design consideration(s) when designing the application example. The composite component data request button 36 is equivalent to a file request operation section of the present invention, and the user 4 clicks the composite component data request button 36 on the browser window of the terminal 3 in order to download a CAD file when the present application example is edited using the CAD software of the terminal 3.

When the component position confirmation button 37 is clicked on the browser window of the terminal 3, a small window displaying the same 3D view as that of the 3D view column 32 is popped up.

FIG. 4 illustrates the state in which the 3D view column 32 and the component position confirmation button 37 are simultaneously displayed on the same browser window of the terminal 3. In this case, since the 3D view column 32 is displayed on the browser window, the user 4 does not need to further operate the component position confirmation button 37 to pop up the small window displaying the same 3D view as that of the 3D view column 32.

However, if the number of characters and images on the selected application example webpage 30 is high, the distances between the composite component data request button 36 at the lower end and the 3D view column 32 at the upper end and between the component list request button 38 at the lower end and the 3D view column 32 at the upper end increase, and for this reason, the 3D view column 32 at the upper end is outside of the window. In such a case, the user 4 can click, without scrolling back to the upper end of the selected application example webpage 30 each time to check the 3D view of the 3D view column 32, the component position confirmation button 37 at the lower end of the page to pop up the small window and check the 3D view.

Both of the component list request button 38 and the elemental component data request button 39 targets, for downloading, one(s) of the elemental components used for the present application example and marketed by the distributer of the design information providing server 1. When the user 4 clicks the component list request button 38, the list of the marketed elemental components is downloaded in a CSV format.

When the user 4 clicks the elemental component data request button 39, the CAD data of the marketed elemental components is downloaded. Note that the CAD data indicates data with a CAD file. At the terminal 3 including the CAD software corresponding to the CAD data, the user 4 can open the CAD file using the CAD software to check or edit a component drawing.

For the component(s) used in the present application example, at least one elemental component name button 44 is positioned at the end of the lead line extending from a point on the 3D view of the 3D view column 32, and the name of such a component is written in the elemental component name button 44. When the user 4 clicks the elemental component name button 44, a small window is popped up such that information on the elemental component connected to the lead line is displayed on the small window.

The idea button 45 is not associated with the elemental component, and is positioned at the end of the lead line extending from a predetermined portion of the present application example to indicate that there is a design idea for the predetermined portion. When the user 4 clicks the idea button 45, a small window is popped up such that information on the design idea for the predetermined portion is displayed on the small window.

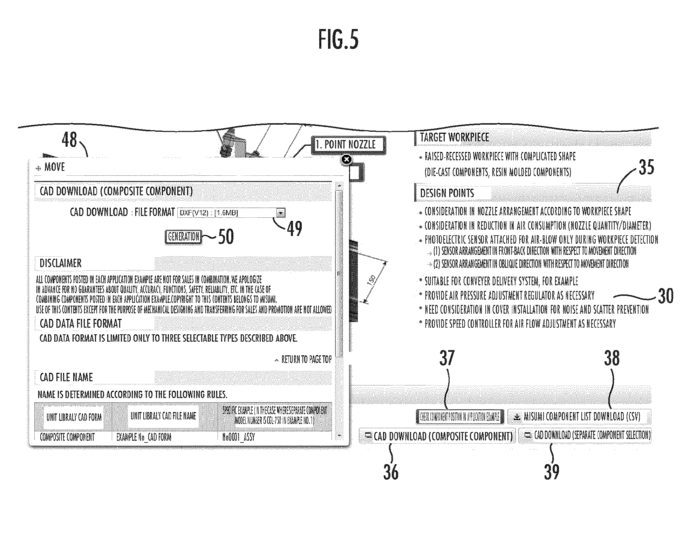

FIG. 5 illustrates a popped-up window 48 displayed when the user 4 clicks the composite component data request button 36. A pull-down box 49 and a generation button 50 are displayed on the popped-up window 48. The user 4 selects, using the pull-down box 49, the type of CAD software to be used at the terminal 3. Note that the types of CAD software described herein include not only particular titles (e.g., AutoCad (registered trademark), SolidWorks (registered trademark), and SolidEdge (registered trademark)) of the CAD software, but also file formats (e.g., DXF or SPEED) commonly used for plural titles of CAD software. On the popped-up window 48, a file name of a composite component CAD file to be downloaded onto the terminal 3 is displayed. Such a file name corresponds to the type of CAD software.

When requesting downloading of the CAD data (the CAD file) of the composite component of Example No. 1 to the design information providing server 1, the user 4 clicks the composite component data request button 36. Subsequently, the user 4 selects the type of CAD software using the pull-down box 49, and then, clicks the generation button 50. When the generation button 50 is clicked, downloading of the composite component CAD file to be used at the selected type of CAD software from the design information providing server 1 to the terminal 3, is started.

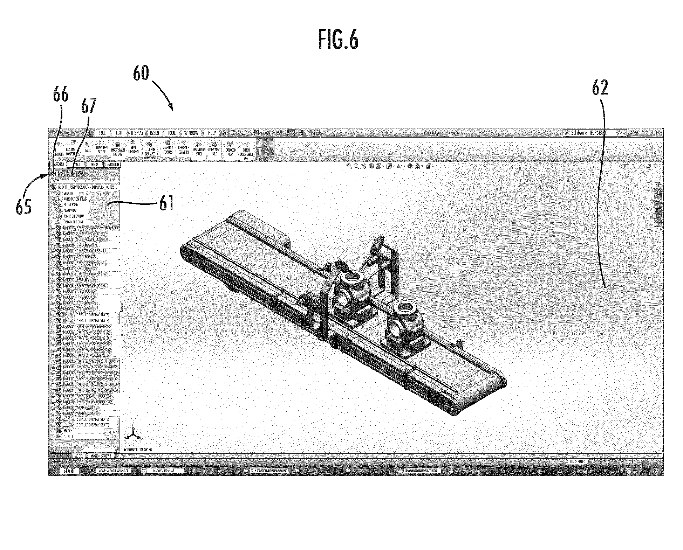

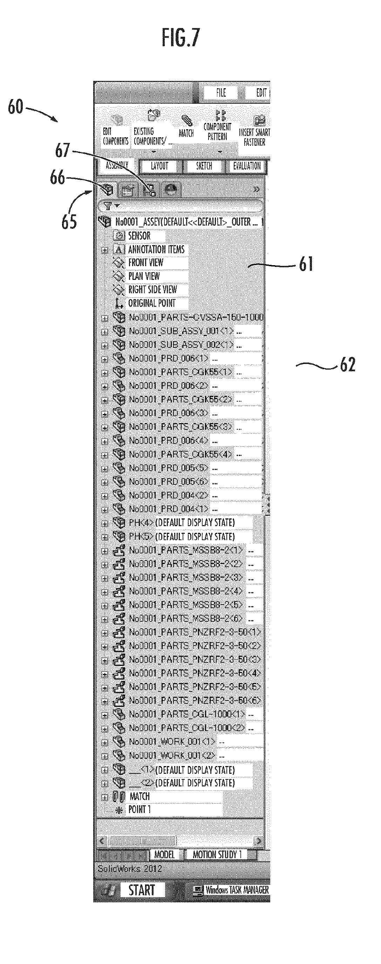

FIG. 6 illustrates the state of a CAD window 60 of the terminal 3 when the composite component CAD file is downloaded from the design information providing server 1 as the composite component CAD data and is opened using the corresponding CAD software (e.g., SolidWorks (registered trademark)). FIG. 7 is an enlarged view of the range of a list area 61 of FIG. 6.

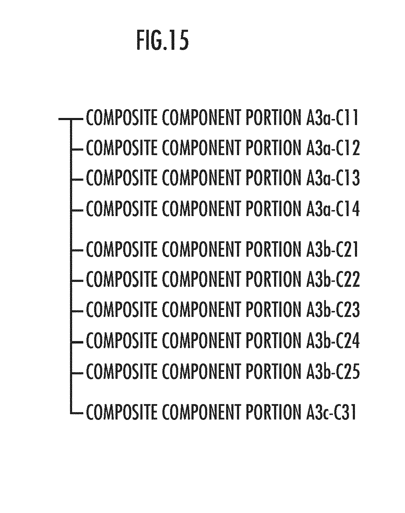

The CAD window 60 is divided into the list area 61 on the left side and a drawing edit area 62 on the right side. The position of the border between the list area 61 and the drawing edit area 62 is adjustable in the right-left direction. An icon column 65 is positioned above the upper side of the list area 61, and includes icons 66, 67. The display state of the list area 61 illustrated in FIG.s 6 and 7 indicates the state when the left icon 66 for displaying a drawing name list in the list area 61 is selected. The configuration icon 67 will be described later with reference to FIG. 15.

In the list area 61, the list of drawing names of the composite component and the elemental components thereof is displayed. In the drawing edit area 62, the view of the composite component formed of the elemental components selected by the user 4 is displayed. In the view of the composite component of the drawing edit area 62, the elemental components selected in the list area 61 is highlighted in a predetermined color. For the view displayed in the drawing edit area 62, various formats such as a 3D view or a 2D drawing can be specified as one function of the CAD software. For the 2D drawing, the types of drawing such as a front view, a plan view, and a side view can be specified as another function of the CAD software.

For example, "No0001" of "No0001_PARTS_CGL-1000<1>" displayed as part of the drawing name in the list area 61 means that such a drawing is associated with Example No. 1. Moreover, "PARTS" does not mean the component drawing of the composite component, but means the component drawing of the elemental component. In addition, "CGL-1000" means the type of elemental component. Further, "<1>" means a parameter value assigned to "CGL-1000."

A model number is unambiguously determined by a parameter specifying a type and a value for such a parameter. In this example, "CGL-1000<1>," "CGL-1000<2>," "MSSBB-2<1>" to "MSSBB-2<6>," and "PNZRF2-3-50<1>" to "PNZRF2-3-50<6>" are model numbers assigned by the elemental component distributor to the elemental components displayed with the drawing names including these model numbers.

### [Configuration of Component Data]

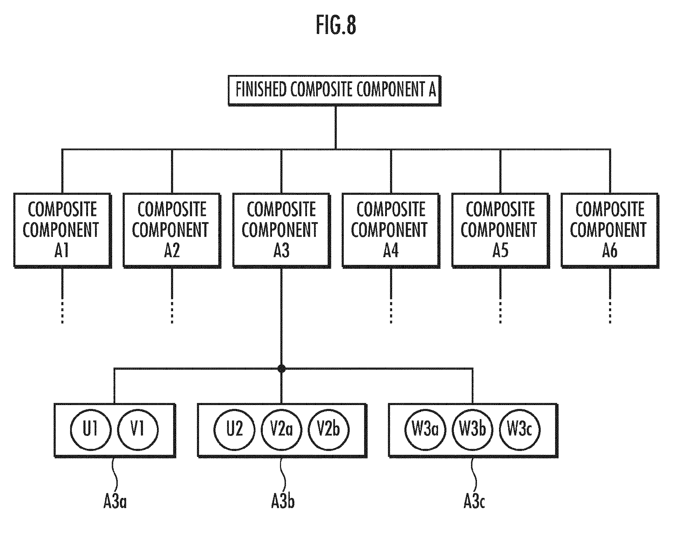

FIG. 8 is a hierarchical structure diagram of a finished assembly product formed by the composite component maker. A finished assembly product A is formed in such a manner that a plurality of composite components A1 to A6 are assembled together. The finished assembly product A belongs to a hierarchical level of an assembly, and the composite components A1 to A6 belong to a hierarchical level of a sub-assembly. The composite component as the application example of FIG. 4 belongs to the hierarchical level of the sub-assembly.

Each of the composite components A1 to A6 is formed of a plurality of composite component portions. For example, the composite component A3 is formed of three composite component portions A3a to A3c. Although the configuration of each composite component portion of the composite components other than the composite component A3 is not shown, each composite component is formed of one or more composite component portions.

The plurality of composite component portions (the composite component portions A3a to A3c in the composite component A3) belonging to the same one of the composite components A1 to A6 are set in such a manner that the one of the composite components A1 to A6 at the upper level is divided, these composite component portions having such a relationship that a parameter combination, i.e., a combination of parameter values described later, can be changed without any interference.

Regarding setting of the parameter combination, no interference among the plurality of composite component portions means a relationship in which even if the parameter combination of one of the composite component portions belonging to the same composite component is changed, the parameter values for the other composite component portions do not need to be changed. For each composite component portion, the parameter values can be changed without considering the parameter values for the other composite component portions.

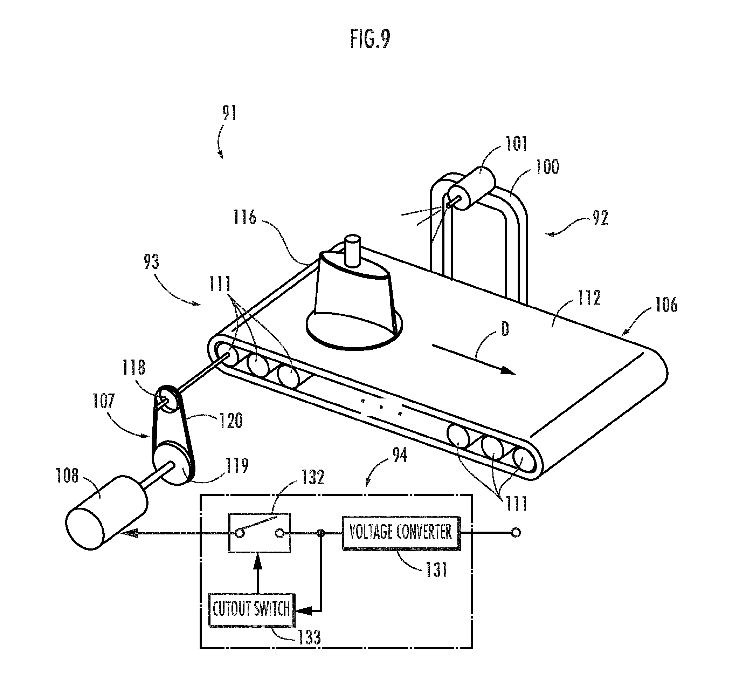

The finished assembly product A, the composite components A1 to A6, and the composite component portions A3a to A3b in the hierarchical structure of FIG. 8 will be described with reference to a specific example. FIG. 9 is a perspective view of an air cleaning device 91. The air cleaning device 91 corresponds to the composite component of the application example.

The air cleaning device 91 includes an air blower 92, a feeder 93, and a power supply 94. The air blower 92 includes a bracket 100 and an air nozzle 101. The feeder 93 includes a belt conveyer 106, a power transmitter 107, and a motor 108. The power supply 94 includes a voltage converter 131, a switch 132, and a cutout switch 133.

In the air blower 92, the bracket 100 is formed in an inverted U-shape, and is fixed to one side portion of the belt conveyer 106. The air nozzle 101 is fixed to the upper side of the bracket 100, and is configured to discharge pressurized air toward the belt conveyer 106.

The belt conveyer 106 of the feeder 93 includes rollers 111 arranged parallel to each other and arranged in line, and a band-shaped belt 112 attached to the rollers 111 to cover all of the rollers 111. A workpiece 116 is fed from one end to the other end in a moving direction D of the band-shaped belt 112 by the band-shaped belt 112. Meanwhile, air discharged from the air nozzle 101 is sprayed onto the workpiece 116 to blow off a substance(s) adhering to the workpiece 116.

The power transmitter 107 includes pulleys 118,119 and a belt 120. The pulley 118 is coupled to a shaft of the most upstream one of the rollers 111 of the belt conveyer 106 in the moving direction D of the workpiece 116, and the pulley 119 is coupled to an output shaft of the motor 108. The belt 120 is wrapped around the pulleys 118, 119 to transmit rotation of the pulley 119 to the pulley 118.

The power supply 94 includes the voltage converter 131, the switch 132, and the cutout switch 133. The voltage converter 131 is, at an input thereof, connected to a not-shown commercial power source to convert the voltage of the commercial power source into a predetermined voltage and output the predetermined voltage. The switch 132 is turned on during operation of the air cleaning device 91 to supply the output voltage of the power supply 94 to the motor 108. The cutout switch 133 monitors the voltage or current supplied from the power supply 94 to the motor 108, and turns off the switch 132 when the supplied voltage or current exceeds an acceptable value.

In the air cleaning device 91, when the switch 132 of the power supply 94 is turned on, the motor 108 receives voltage from the voltage converter 131 to rotate. Rotation of the motor 108 is transmitted to the rollers 111 of the belt conveyer 106 via the power transmitter 107, and then, the band-shaped belt 112 circles. The workpiece 116 moves with circling of the band-shaped belt 112. While the workpiece 116 is moving, air discharged from the air nozzle 101 is sprayed onto the workpiece 116 to clean the workpiece 116.

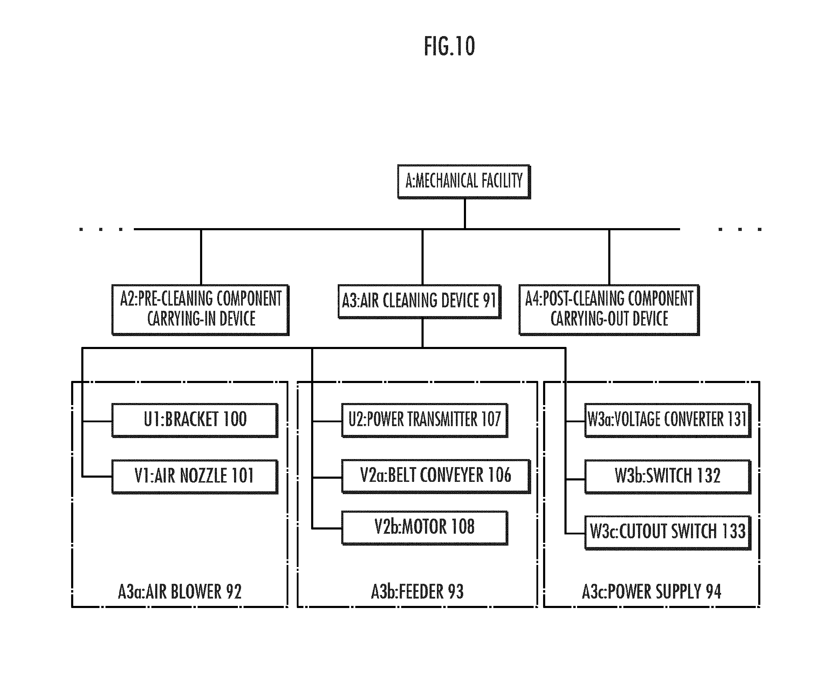

FIG. 10 illustrates a hierarchical structure diagram where the air cleaning device 91 is applied to the hierarchical structure of FIG. 8. A mechanical facility equipped with the air cleaning device 91 corresponds to the finished assembly product A in the hierarchical structure of FIG. 8. Note that the finished assembly product A may be not only mechanical facilities at factories, but also devices for manufacturing predetermined products and mechanical products marketed by the composite component maker which is the company to which the user 4 belongs.

The air cleaning device 91 corresponds to the composite component A3. The composite component A2 may be, e.g., a pre-cleaning component carrying-in device for carrying the workpiece 116 into the air cleaning device 91, and the composite component A4 may be, e.g., a post-cleaning component carrying-out device for carrying the workpiece 116 out of the air cleaning device 91.

The air blower 92 corresponds to the composite component portion A3a. The feeder 93 corresponds to the composite component portion A3b. The power supply 94 corresponds to the composite component portion A3c.

In FIG.s 8 and 10, each composite component portion is formed of one or more of internally-manufactured elemental components, marketed elemental components, and elemental components marketed by other distributors. In FIG.s 8 and 10, a first character of a reference number/character indicating the internally-manufactured elemental component is "U." A first character of a reference number/character indicating the marketed elemental component is "V." A first character of a reference number/character indicating the elemental component marketed by other distributor is "W."

The composite component portion A3a is formed by assembling of an internally-manufactured elemental component U1 and a marketed elemental component V1. The composite component portion A3b is formed by assembling of an internally-manufactured elemental component U2 and marketed elemental components V2a, V2b. The composite component portion A3c is formed by assembling of other distributor's marketed elemental components W3a to W3c.

The bracket 100 corresponds to the internally-manufactured elemental component U1. The air nozzle 101 corresponds to the marketed elemental component V1. The power transmitter 107 corresponds to the internally-manufactured elemental component U2. The belt conveyer 106 and the motor 108 correspond respectively to the marketed elemental components V2a, V2b. The voltage converter 131, the switch 132, and the cutout switch 133 correspond respectively to the other distributor's marketed elemental components W3a to W3c.

The internally-manufactured elemental components U1, U2 are internally-manufactured elemental components different from each other in a parameter type. If the internally-manufactured elemental components have the same parameter, but have different parameter values, such internally-manufactured elemental components are considered as internally-manufactured elemental components different from each other. The marketed components V1, V2a, V2b are marketed elemental components different from each other in a parameter type. Similarly, if the marketed elemental components have the same parameter, but have different parameter values, such marketed elemental components are considered as marketed elemental components different from each other. The other distributor's marketed elemental components W1 to W3 are other distributor's marketed elemental components different from each other in a parameter type. Similarly, if the other distributor's marketed elemental components have the same parameter, but have different parameter values, such other distributor's marketed elemental components are considered as other distributor's marketed elemental components different from each other.

Note that the parameter is for specifying the dimensions such as vertical, horizontal, and radius dimensions, the angle, the weight, or the strength of an elemental component, for example. The parameter value is, e.g., a value for length parameter, and such a length parameter value is, e.g., 10 mm, 20 mm, 30 mm, ...

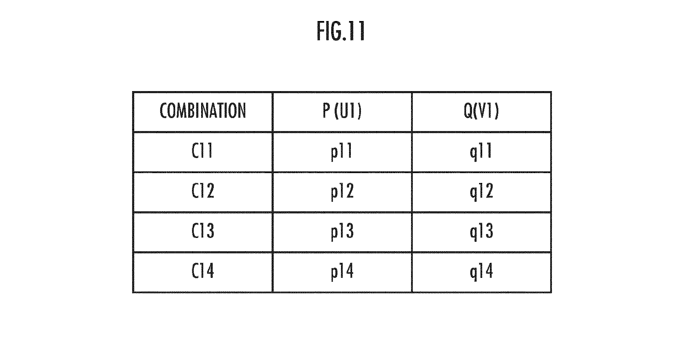

FIG. 11 illustrates an example of parameter combinations for the internally-manufactured elemental component U1 and the marketed elemental component V1 forming the composite component portion A3a. In this example, four parameter values p11 to p14 are set for the parameter P (U1) of the internally-manufactured elemental component U1. Four parameter values q11 to q14 are set for the parameter Q (V1) of the marketed elemental component V1. Four parameter combinations C11 to C 14 between the parameter P (U1) and the parameter Q (V1) are set. Specifically, these combinations include the following four combinations: C11= (p11, q11), C12 = (p12, q12), C13 = (p13, q13), and C14 = (p14, q14).

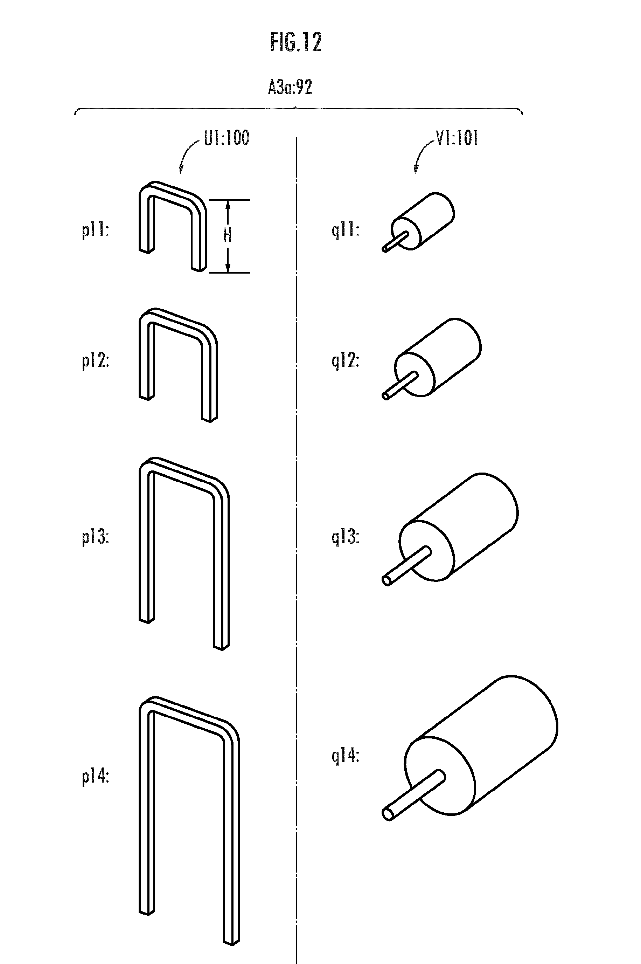

FIG. 12 illustrates the correspondence relationship between the parameter value of FIG. 11 and the parameter value of the air blower 92 of the air cleaning device 91. The bracket 100 as the internally-manufactured elemental component U1 has a height H as a parameter, and p11 to p14 of FIG. 11 correspond respectively to values for the height H of the bracket 100. The air nozzle 101 as the marketed elemental component V1 has a discharge flow rate as a parameter, and q11 to q14 of FIG. 11 correspond respectively to values for the discharge flow rate of the air nozzle 101.

Returning to FIG. 11, C11 is set for the composite component portion A3a as a default parameter combination. The remaining C12 to C14 are the parameter combinations other than the default combination. The default parameter combination is a parameter combination applied to a composite component displayed in the drawing edit area 62 on the CAD window 60 (see FIG. 6) when a composite component CAD file downloaded from the design information providing server 1 is opened.

Suppose that in the case where the composite component A3 of FIG. 8 is the composite component of Example No. 1, the user 4 downloads the composite component CAD file of the composite component A3 onto the terminal 3 and opens such a file using the CAD software of the terminal 3, and then, the composite component is displayed in the drawing edit area 62. In this case, the internally-manufactured elemental component U1 and the marketed elemental component V 1 having the parameter values defined in the combination C11 are displayed within the first-display area of the composite component portion A3a of the composite component.

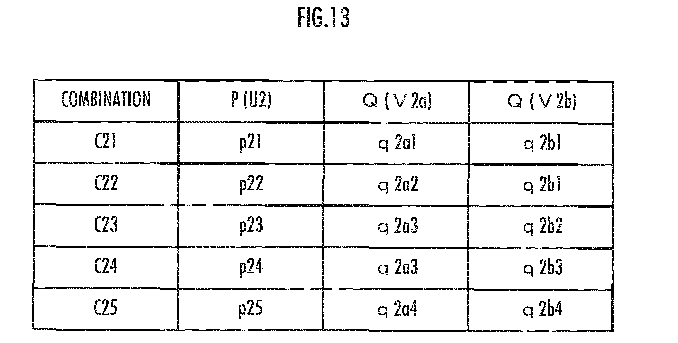

FIG. 13 illustrates an example of combinations for the internally-manufactured elemental component U2 and the marketed elemental components V2a, V2b forming the composite component portion A3b. In this example, five parameter values p21 to p25 are set for the parameter P (U2) of the internally-manufactured elemental component U2. Four parameter values q2a1 to q2a4 are set for the parameter Q (V2a) of the marketed elemental component V2a. Four parameter values q2b 1 to q2b4 are set for the parameter Q (V2b) of the marketed elemental component V2b.

In this example, five parameter combinations C21 to C25 among the parameter P (U2), the parameter Q (V2a), and the parameter Q (V2b) are set. In the example of FIG. 13, different parameter values p21 to p25 for P (U2) correspond respectively to different parameter combinations. Regarding Q (V2a), Q (V2b), the same value may be set for different parameter combinations. For example, C21 and C22 have different Q (V2a), i.e., q2a1 and q2a2, but have the same Q (V2b), i.e., q2b1. Moreover, C23 and C24 have different Q (V2b), i.e., q2b2 and q2b3, but have the same Q (V2a), i.e., q2a3.

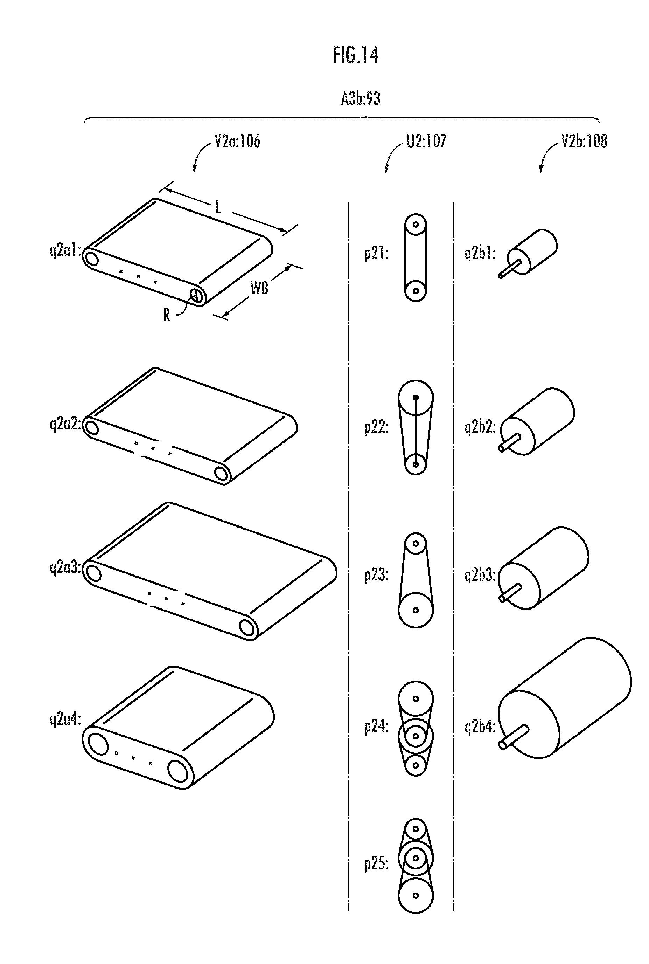

FIG. 14 illustrates the parameter values of the feeder 93 as a specific example of the parameter values of the combinations of FIG. 13. The power transmitter 107 as the internally-manufactured elemental component U2 has a transmission gear ratio as a parameter, and p21 to p25 of FIG. 13 correspond respectively to values for transmission gear ratio. The belt conveyer 106 as the marketed elemental component V2a has a group of a length L, a width B, and a roller diameter R as a parameter, and q2a1 to q2a4 of FIG. 13 correspond respectively to group numbers. The motor 108 as the marketed elemental component V2b has a rated output as a parameter, and q2b1 to q2b4 of FIG. 13 correspond respectively to values for rated output.

Returning to FIG. 13, C21 is set for the composite component portion A3b as a default parameter combination. The remaining C22 to C25 are the parameter combinations other than the default combination. Suppose that in the case where the composite component A3 of FIG. 8 is the composite component of Example No. 1, the user 4 downloads the composite component CAD file of the composite component A3 onto the terminal 3 and opens such a file using the CAD software of the terminal 3, and then, the composite component is displayed in the drawing edit area 62. In this case, the internally-manufactured elemental component U2 and the marketed elemental components V2a, V2b having the parameter values defined in the combination C21 are displayed in the drawing edit area 62 within the first-display area corresponding to the composite component portion A3b of the composite component.

Returning to FIG.s 8 and 10, the internally-manufactured elemental components U1, U2 and the marketed elemental components V1, V2a, V2b each form a single type of elemental component. The internally-manufactured elemental component U1, U2 is an example of a first type of internally-manufactured component. The marketed elemental component V1, V2a, V2b is an example of a second type of marketed elemental component. Each internally-manufactured elemental component U1, U2 has a corresponding one of the parameters P (U1), P (U2). Each marketed elemental component V1, V2a, V2b has a corresponding one of the parameters Q (V1), Q (V2a), Q (V2b). The parameter P (U1) or P (U2) corresponds to a first parameter of the present invention, and the parameter Q (V1), Q (V2a), or Q (V2b) corresponds to a second parameter of the present invention. Even in the case of the same type of internally-manufactured elemental component or the marketed elemental component, if the parameter values p11 to p14, p21 to p25, q11 to q14, q2a1 to q2a4, q2b1 to q2b4 vary, such internally-manufactured elemental components or marketed elemental components are considered as different components.

Returning to FIG. 10, since the composite component portion A3c is associated with the other distributor's marketed elemental components W3a to W3c, only a single parameter combination is set for the composite component portion A3c. Thus, the specifications of the composite component portion A3c prepared for the CAD file are only default specifications. In the case of changing the specifications of the composite component portion A3c, the user 4 does not change the parameter combination, but needs to design, by the user 4 oneself, other specifications of the other distributor's marketed elemental components W3a to W3c. Note that a change in the specifications of the other distributor's marketed elemental components W3a to W3c by the terminal 3 does not influence the specifications of the composite component portions A3a, A3b.

In the example of FIG. 11, the number of parameter combinations of the composite component portion A3a is four. In the example of FIG. 13, the number of parameter combinations of the composite component portion A3b is five. The number of combinations is limited because of the following reasons: the elemental component distributor cannot grasp the specific specifications of the composite component portions A3a, A3b actually required by the composite component maker, and thus, there is a high probability that an increase in the number of parameter combinations at the elemental component distributor's discretion is useless. The number of parameter combinations is limited and selected by the elemental component distributor, these parameter combinations being limited to the parameter combinations corresponding to the specifications of the composite component portion whose frequency of use in the market is considered high or the specifications of the composite component portion highly recommended by the elemental component distributor, for example.

The composite component CAD file downloaded from the design information providing server 1 to the terminal 3 contains the CAD data of the elemental components corresponding to the parameter values of the parameter combinations C11 to C 14, C21 to C25 set for the composite component portions A3a, A3b. Moreover, such a CAD file also contains the data indicating which ones of the parameter combinations C11 to C 14, C21 to C25 are the default parameter combinations (e.g., C11 and C21).

As a result, the number of specifications of the composite component A3 is obtained as follows: the number of combinations of the composite component portion A3a x the number of combinations of the composite component portion A3b x the number of combinations of the composite component portion A3c.

Each of the composite components A1 to A6 is divided into a plurality of composite component portions so that the parameter combination can be set without interference among the composite component portions A1 to A6. This can enhance the efficiency in selection of the parameter combination across the entirety of the composite component. In addition, a suitable number of parameter combinations can be ensured for a change in the specifications of the composite component.

Further, the second parameter values q11 to q14, q2a1 to q2a4, q2b1 to q2b4 in the parameter combinations C11 to C14, C21 to C25 can be dynamically set by the distributor of the marketed elemental components V1, V2a, V2b according to a distributor's marketing strategy. Marketing of the marketed elemental components can be facilitated in such a manner that the second parameter value q11, q2a1, q2a2 in the default combination is set to a value for an elemental component that the distributor most wishes to sell on a moment-to-moment basis or that the combination containing the second parameter value corresponding to an marketed elemental component which is out of stock is set not to be included in C11 to C14, C21 to C25. Note that the second parameter values q11 to q14, q2a1 to q2a4, q2b1 to q2b4 in the parameter combinations C11 to C14, C21 to C25 are dynamically set by the design information providing server 1 based on a distributor's instruction of preferentially marketing marketed elemental components or on the inventory quantity of marketed elemental components referenced from inventory database (not shown).

### [Design Operation by User]

The user 4 opens, using the CAD software of the terminal 3, the composite component CAD file downloaded from the design information providing server 1 to display such a file in the drawing edit area 62 (see FIG. 6). The drawing of the composite component first displayed in the drawing edit area 62 corresponds to the default specification parameter combination. When determining that such specifications do not match those of a user's company, the user 4 switches the parameter combination as described with reference to FIG.s 11 and 13, thereby easily changing the specifications.

The specific operation of switching the parameter combination by the user 4 in the CAD software will be described with reference to FIG. 15. FIG. 15 illustrates configuration information displayed when the user 4 clicks the configuration icon 67 on the CAD window of FIG. 6.

In the configuration information of FIG. 15, the one-dimensional list of combinations set for the composite component portions A3a to A3c is displayed in the list area 61. In the displayed one-dimensional list, the combinations C11 to C 14 of FIG. 11, the combinations C21 to C25 of FIG. 13, and the combination C31 of the composite component portion A3c are displayed such that the name of the composite component portion A3a, A3b, A3c to which each combination belongs and a sign "-" are attached to the front of each name of these combinations. Note that in the example of FIG. 15, C11 to C 14, C21 to C25, and C31 are not used as reference numerals/characters, but are used as the characters indicating the names of the combinations C11 to C14, C21 to C25, C31. In the CAD software of the terminal 3, the elemental component distributor sets, in advance, the contents of the composite component CAD file downloaded from the design information providing server 1 of the elemental component distributor such that the configuration information of FIG. 15 is displayed.

The user 4 selects a desired combination for each of the composite component portions A3a to A3c of the configuration information. Note that the combinations C11, C21, and C31 are selected as default. Currently-selected combinations are displayed highlighted. The user 4 clicks the icon 66 (see FIG. 7) after selection of the combinations to return the display of the list area 61 to the display of the component drawing names. After returning, the component drawing names of the list area 61 are changed corresponding to the combinations selected from the configuration information.

Each elemental component drawing name of the list area 61 (see FIG. 7) of the CAD software includes a model number (e.g., "CGL-1000<1>") determined for the elemental component by the elemental component distributor, such as "No0001_PARTS_CGL-1000<1>" as described above. Thus, the user 4 can recognize the model number of the elemental component of the elemental component distributor used for the composite component.

The CAD software has the function of displaying or printing out the drawing names of the components included in the completed drawing when the drawing of the composite component having specifications desired by the user 4 is completed. Thus, the user 4 can recognize the model number from the displayed or printed-out drawing name, and can properly order the marketed elemental component from the elemental component distributor by the model number.

Since the data on the model number of the marketed elemental component forming the composite component having the specifications desired by the user 4 is contained in the CAD file, the user 4 can save the trouble of obtaining the data of the model number information of the marketed elemental component separately from the CAD file in order to order the marketed elemental component included in the composite component having the determined specifications, leading to an efficient order process.

The embodiment of the present invention has been described, but the present invention is not limited to such an embodiment. Various modifications can be made within the scope of the gist of the present invention and can be worked.

In the embodiment, the terminal 3 is equipped with the CAD software, and the design information providing server 1 transmits the data of the CAD file to the terminal 3. However, a specification change can be performed without any special pre-installed CAD software, in such a manner that the providing server 1 transmits a design file having an editing software to the terminal 3 and that the terminal 3 executes the editing software.

### Industrial Applicability

The present invention is utilized for a design information providing device configured to provide a terminal with information on a composite component via a network. The present invention is also utilized as a design information providing device configured to teach useful knowledge and rationalize a design process, when a user of a maker of a composite component formed by assembling of predetermined elemental components, designs the composite component.

### Reference Signs List

- 1: design information providing server (design information providing device)
- 2: Internet (network)
- 3: terminal
- 4: user
- 8: first webpage transmitter
- 9: receiver
- 10: second webpage transmitter
- 11: request receiver
- 12: file transmitter
- 20a, 20b: composite component selection webpage (first webpage)
- 21: search window
- 30: selected application example webpage (second webpage)
- 31: title column
- 32: 3D view column
- 33: feature column
- 34: target workpiece column
- 35: design point column
- 36: composite component CAD data request button (file request operation section)

## Claims

1. A design information providing device comprising:
a first webpage transmitter configured to transmit data on a first webpage where a plurality of composite components are arranged and displayed, to a terminal via a network, each of the composite components being formed by assembling of a plurality of elemental components including a marketed elemental component;
a receiver configured to receive, via the network, data indicating a selected composite component which is a composite component selected by a user from the first webpage displayed on the terminal;
a second webpage transmitter configured to transmit data on a second webpage to the terminal via the network, the second webpage displaying
a 3D view of the selected composite component,
a name of each elemental component forming the selected composite component and a position of each elemental component forming the selected composite component on the 3D view,
a design consideration on the selected composite component, and
a file request operation section;
a request receiver configured to receive a file request made by the user via the file request operation section at the terminal; and
a file transmitter configured to when the request receiver receives the file request, transmit data on a design file of the selected composite component to the terminal via the network such that a specification of the selected composite component is changed from a default specification at the terminal, the data on the design file containing
information on a composite component with the default specification,
information on elemental components forming the composite component with the default specification, and
information on elemental components forming a composite component with a specification different from the default specification.

2. The design information providing device according to claim 1, wherein
the elemental components forming the composite component include, in addition to the marketed elemental component marketed by a provider of the design file, an internally-manufactured elemental component internally manufactured by the user,
the internally-manufactured elemental component includes a plurality of first-type internally-manufactured elemental components identified by a first parameter value,
the marketed elemental component includes a plurality of second-type marketed elemental components identified by a second parameter value,
the design file contains data on the plurality of first-type internally-manufactured elemental components, data on the plurality of second-type marketed elemental components, and data on plural combinations between the first and second parameter values,
one of the plural combinations is set corresponding to the composite component with the default specification,
the remaining combination is set corresponding to the composite component with the specification other than the default specification, and
the data on the design file of the selected composite component is made such that the specification of the selected composite component is changeable by changing the combination.

3. The design information providing device according to claim 2, wherein
the second parameter value in the combination corresponding to the default specification and the second parameter value in the combination corresponding to the specification other than the default specification are dynamically set.

4. The design information providing device according to claim 2, wherein
each composite component is divided into a plurality of composite component portions such that a parameter value combination change is made without interference, and
each combination is set for a corresponding one of the composite components portions.

5. The design information providing device according to claim 2, wherein
the design file contains
data on a component drawing of each marketed elemental component having a corresponding parameter value, and
data on a name of the component drawing, the name including a model number determined for each marketed elemental component having a corresponding parameter value by the provider of the design file.
